# EUROPEAN PATENT APPLICATION

(11) **EP 1 109 282 A1**
(43) Date of publication of application: **20.06.2001**
(21) Application number: 99204296.0
(22) Date of filing: 14.12.1999
(51) Int. Cl.: H02J 3/18

(54) **A medium voltage power factor controlled switchboard**

(71) Applicant: ABB T&D Technology Ltd., 8050 Zürich (CH)
(72) Inventor: Boattini, Fulvio, 20090 Trezzano sul Naviglio (MI) (IT); Cereda, Carlo, 24043 Caravaggio (BG) (IT); Gemme, Carlo, 16166 Genova-Quinto (IT)
(74) Representative: Giavarini, Francesco

(57) **Abstract**

A medium voltage power factor controlled switchboard comprising means, for limiting the electric current circulating in capacitor banks used for the power factor control, said means being positioned, so as to be integrated in the containing body comprised in a switching device.

## Description

The present invention relates to a medium voltage switchboard which is power factor controlled and has improved characteristics.

Power factor controlled (PFC) switchboards, particularly for medium voltage applications (i.e. approximately for a voltage range from 1 KV to 35 KV), are known in the state art.

The PFC switchboards have been introduced in order to improve the so-called "Power Quality" of the electric power supplied to the load. With the term of "Power Quality", it is commonly meant the management of the supplied electric power, so as to avoid problems related to current, voltage or frequency deviations that would result in a failure of the load or the power distribution network. It is known that, for achieving a satisfactory power quality, it is essential the control of the power factor related to the electric power supplied to the load.

The power factor is controlled providing a suitable amount of reactive power to the load. Unfortunately, providing reactive power from the power distribution network to the load can be expensive to the user, due to the utility fee policy, especially if the load is characterised by a low power factor. For this reason, in the common practice, the requested amount of reactive power is generated locally, using a certain number of capacitor banks.

Such capacitor banks are connected/disconnected with the PFC switchboard that feeds the load, so as to provide a certain amount of reactive power needed to ensure the achievement of the optimal power factor level, without additional costs for the user.

In former applications known in the state of the art these capacitors banks were separated from the PFC switchboards. They were placed in a location and were connected to the PFC switchboard through the use of cables.

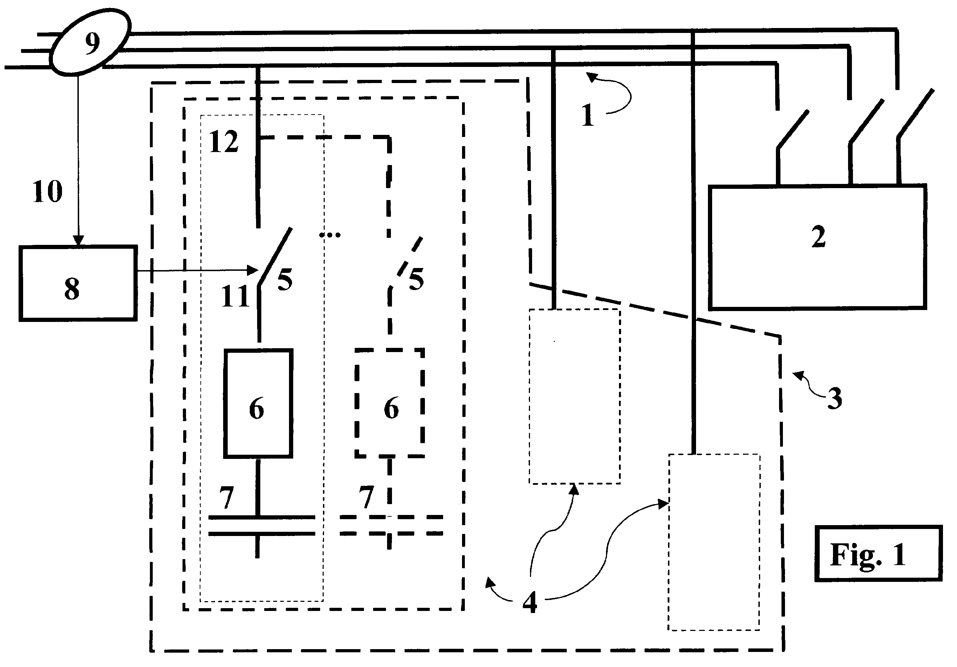

Such technical solutions, even if they allow satisfying the needs described above, are characterised by relatively high installation and operation costs for the user. For this reason, recently, different solutions have been introduced. In these solutions, the capacitor banks are comprised inside the PFC switchboard in order to save space and installation costs. Referring to figure 1, it is possible to observe a schematic view of a medium voltage PFC switchboard wherein this technical solution has been applied.

The PFC switchboard comprises a plurality of bars 1, connected to a power distribution network (not shown), for providing electric power to a load 2.

The PFC switchboard comprises an electric circuit 3, connected to the bars 1. The electric circuit 3 provides reactive power to the bars 1. In the case illustrated in figure 1, a three-phase PFC switchboard is illustrated. Generally the electric circuit 3 comprises one or more portions 4 comprising a plurality of branches 12, generally connected in parallel. Generally, each portion 4 is connected to one of the bars 1.

A branch 12 comprises generally a capacitor bank 7 and a switching device 5 for connecting/disconnecting the capacitor bank 7 to one of the bars 1. The switching device 5 is generally an electric contactor, which allows performing an elevate number of connecting/disconnecting operations during its life-cycle. The electric contactor is generally provided with a protection fuse, which is placed in a container, which is mechanically connected to electric contactor, so as to be integrated with the containing body of said electric contactor.

It is known that high currents (generally called "in-rush currents) circulate in the capacitor banks when they are connected to the PFC switchboard bars. These currents flow into a capacitor bank 7 from the bars 1 or from other parallel connected capacitor banks 7 that have been already charged.

In order to limit the current circulating in the capacitor banks 7, in each branch 12, it is generally provided a limiting device 6, generally a limiting reactance, which is commonly placed downstream the switching device 5 and in series with capacitor bank 7.

Even if the power factor controlled medium voltage PFC switchboards, comprising the electric circuit 3, represent a remarkable improvement in the state of the art, they are characterised by some drawbacks.

The insertion of the limiting reactance in the PFC switchboard is very difficult, due to the presence of many components internal to the PFC switchboard and due to the fact that insulation distances must be necessarily maintained. So, the design of the PFC switchboard becomes difficult, also because, very often, the available room is relatively small.

Furthermore, in many PFC switchboards, the insertion of the limiting reactance is possible only if the size of the capacitor banks is reduced. This fact limits considerably the possibility of providing locally a suitable level of reactive power to the load. Obviously, this can be expensive to the user.

Moreover, the insertion of the limiting reactance provokes the need of very complicated installation steps. Also, it becomes very difficult executing the maintenance operations that may be required, with a further increase of time and costs.

Main aim of the present invention is to provide a medium voltage PFC switchboard, which allows a simple installation of a limiting device, particularly a limiting reactance, for reducing the current circulating in the capacitor banks that are comprised in the electric circuit for providing reactive power to the bars of the switchboard.

Within this aim, another object of the present invention is to provide a medium voltage PFC switchboard, which allows inserting a limiting reactance without enhancing the size of the switchboard.

Another object of the present invention is to provide a medium voltage PFC switchboard, which allows inserting a limiting reactance without reducing the size of the capacitor banks, that are comprised in the switchboard for providing reactive power, so as to ensure a suitable control of the power factor.

Not the least object of the present invention is to provide a medium voltage PFC switchboard, which is easy to the design, easy to install and maintain with a relatively low effort in term of time and costs.

Thus, the present invention provides a medium voltage power factor controlled (PFC) switchboard comprising:
- a plurality of bars, connected to a power distribution network, for providing electric power to a load;
- an electric circuit connected to said plurality bars, for providing reactive power to said plurality of bars, said electric circuit comprising one or more portions, at least one of said portions comprising:
- one or more of capacitor banks;
- one or more switching devices for electrically connecting/disconnecting said capacitor banks to said plurality of bars;
- first means, for reducing the electric current circulating in said capacitor banks.

The medium voltage PFC switchboard, according to the present invention, is characterised by the fact that said first means are positioned, so as to be integrated in the containing body of said one or more switching devices.

The present invention allows achieving the described intended aims.

In fact, thanks to the particular installation of said first means they can be considered a piece of the containing body of said one or more switching devices. So, they can be inserted inside the PFC switchboard in a very simple manner, allows a remarkable save of room, allows optimising also the other elements comprised in the PFC switchboard.

Further characteristics and advantages of the invention shall emerge more clearly from the description of preferred but not exclusive embodiments of the method according to the present invention. The preferred embodiments of the medium voltage PFC switchboard, according to the present invention, are illustrated purely by way of example and without limitation in the attached drawings, wherein:
figure 1 is a diagram, which illustrates a schematic view of a known medium voltage PFC switchboard;
figure 2 is a diagram, which illustrates a schematic partial view of a known medium voltage PFC switchboard, according to the present invention;
figure 3 is a diagram, which illustrates another schematic partial view of a known medium voltage PFC switchboard, according to the present invention.

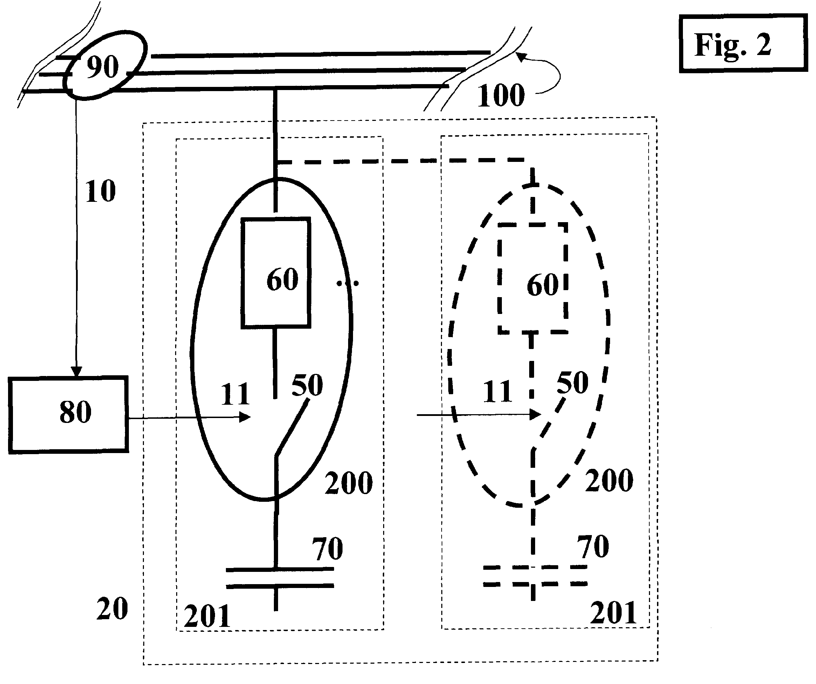

With reference to figure 2, the medium voltage PFC switchboard, according to the present invention comprise a plurality of bars 100, connected to a power distribution network, for providing electric power to a load (not illustrated).

It is also provided an electric circuit (not illustrated) connected to said plurality of bars 100, for providing them reactive power.

Said electric circuit comprises one or more portions 20. Preferably each portion 20 is connected to one bar of the plurality of bar 100. At least one of said portions comprises one or more of capacitor banks 70 and one or more switching devices 50 for electrically connecting/disconnecting said capacitor banks 70 to said plurality of bars 100. First means 60, for limiting the electric current circulating in said capacitor banks 70 are also provided. Every portion 20 can comprise one or more branches 201, connected in parallel, each comprising a capacitor bank 70 electrically connected to a switching device 50 and said first means 60.

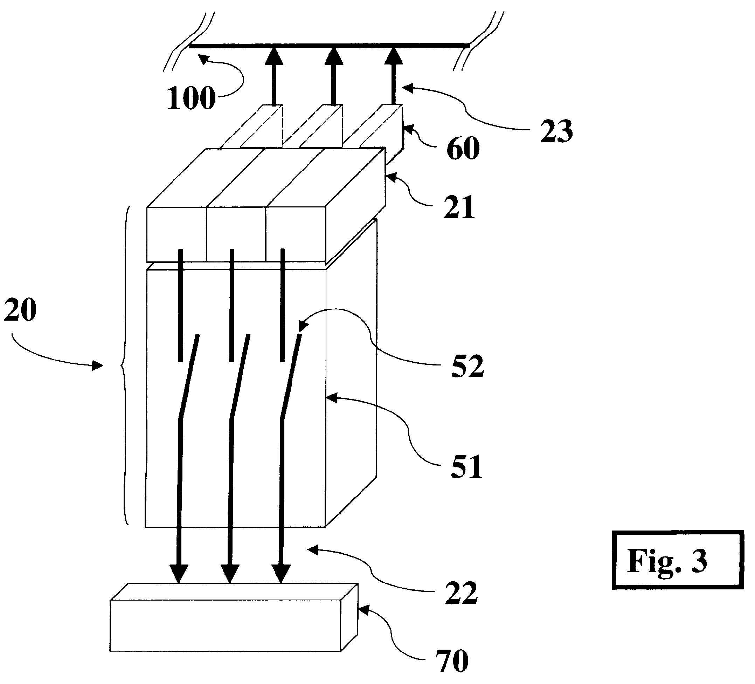

With reference of figure 3, the switching device 50 comprise a containing body 51 and at least a movable contact and a fixed contact (globally indicated by reference 52) that can be mutually coupled/separated for electrically connecting/disconnecting the capacitor bank 70 to the plurality of bars 100.

As schematically indicated by the closed lines 200 of figure 2, the first means 60 are positioned; so as to be integrated in the containing body 51 of said switching devices 50. The first means 60 can preferably be connected between said switching device 50 and said plurality of bars 100. As it will be described better furthermore, this fact can facilitate the integration of said first means in the containing body 51 of said switching device 50.

Referring again to figure 2, every switching device 50 can be connected to control means 80 (e.g. a digital relay). Control means 80 receives, from sensor means 90, signals 10, indicative of the current and/or the voltage related to the bars 100. Based on signals 10, control means 8 generates signals 11 for controlling the switching device 50, so as to provide a predefined amount of reactive power to said plurality of bars 100.

Thanks to this advantageous embodiment of the switchboard according to the present invention, a suitable control of the power factor is ensured.

Referring to figure 3, in a preferred embodiment, said first means 60 can be positioned in a predefined container 21, which is mechanically connected to said switching device 50, so as to be integrated with its containing body 51.

Preferably the first means 60 comprises at least a limiting reactance having, in a preferred embodiment, at least magnetic core made of polymeric material filled with iron material. In particular, the magnetic core can be made of epoxy resin, filled with iron dust.

This solution is particularly advantageous because it allows reducing remarkably the size of the limiting reactance 60, so as to more easily installed inside the container 21.

In a preferred embodiment, the switching device 50 can be an electric contactor and the container 21 can preferably be the fuse-holder of the electric contactor 50. In practice, the fuse of the electric contactor can be eliminated and can be replaced by limiting reactance 60. This embodiment is quite advantageous because it ensures a very high level of integration without modifying any structure of the PFC switchboard.

For the sake of clarity, a limiting reactance should be placed for every pole of the electric contactor. Obviously this should not be considered a limitation of the described invention but it is due fact that generally these kinds of application are electrically three-phased.

It should be noticed that the limiting reactance 60 can be simply plug-in into the container 21. In this way, the installation of limiting reactance is simplified, with a remarkable reduction of time and costs.

Obviously, also the maintenance operations are remarkably easier to be performed. Moreover, this embodiment is particularly advantageous because it allows rearranging in a simple manner, switchboards that have been already installed.

The same design of the medium voltage PFC switchboard is simplified.

In fact, the size of the capacitor banks can be easily optimised, without having problems of available room.

Finally, it should be noticed that the protection function previously offered by the fuse, can be carried out by any kind of protection device, positioned upstream with respect of the PFC switchboard. This fact, which apparently can represent a disadvantage, allows performing a further optimisation of the capacitor banks, without having the constraints imposed by the presence of the protection fuse.

The medium voltage PFC switchboard thus conceived is susceptible of numerous modifications and variations, all of which are within the scope of the inventive concept; all the details may furthermore be replaced with other technically equivalent elements.

## Claims

1. A medium voltage power factor controlled switchboard comprising:
- a plurality of bars, connected to a power distribution network, for providing electric power to a load;
- an electric circuit connected to said plurality bars, for providing reactive power to said plurality of bars, said electric circuit comprising one or more portions, at least one of said portions comprising:
- a capacitor bank;
- a switching device, comprising a containing body and at least a movable contact and a fixed contact that can be mutually coupled/separated for electrically connecting/disconnecting said capacitor bank to said plurality of bars;
- a first means, for limiting the electric current circulating in said capacitor bank; characterised by the fact that said first means are positioned, so as to be integrated in said containing body comprised in said switching device.

2. A medium voltage switchboard according to claim 1, characterised by the fact that said first means are electrically connected, between said switching device and said plurality of bars.

3. A medium voltage switchboard according to one or more of the claims from 1 to 2, characterised by the fact that said first means are positioned in a predefined container, which is mechanically connected to said switching device, so as to be integrated with the containing body of said switching device.

4. A medium voltage switchboard according to one or more of the previous claims, characterised by the fact that first means comprises at least a limiting reactance.

5. A medium voltage switchboard according to claim 4, characterised by the fact that said limiting reactance comprises at least a magnetic core made of polymeric material filled with iron material.

6. A medium voltage switchboard according to claim 5, characterised by the fact that said limiting reactance comprises at least a magnetic core made of epoxy resin filled with iron dust.

7. A medium voltage switchboard according to one or more of the previous claims, characterised by the fact that each of said bars is connected to one of said portions of said electric circuit.

8. A medium voltage switchboard according to one or more of the previous claims, characterised by the fact that one or more of said portions of said electric circuit comprises:
- a plurality of branches connected in parallel, each of said branches comprising:
- a capacitor bank electrically connected to a switching device; and
- a limiting reactance placed in a predefined container, mechanically connected to said switching device, so as to be integrated with the containing body of said switching device, said limiting reactance being electrically connected upstream to said switching device.

9. A medium voltage switchboard according to claim 8, characterised by the fact that said switching device is an electric contactor.

10. A medium voltage switchboard according to one or more of the previous claims, characterised by the fact that of comprising:
- sensor means for generating signals indicative of the electric current and/or voltage related to said bars; and
- control means for generating, based on said signals indicative of the electric current and voltage related to said bars, signals for controlling said switching devices, so as to provide a predefined amount of reactive power to said plurality of bars.

11. A medium voltage switchboard according to claim 10, characterised by the fact that said control means comprise a digital relay.
